# EUROPEAN PATENT APPLICATION

(11) **EP 4 756 058 A1**
(43) Date of publication of application: **10.06.2026**
(21) Application number: 24896983.4
(22) Date of filing: 01.08.2024
(51) Int. Cl.: C22C 38/00, B22D 11/00, B22D 11/124, B23K 11/11, B23K 11/16, C21D 8/02, C21D 9/46, C22C 38/14, C22C 38/60, C23C 2/02, C23C 2/06, C23C 2/28, C25D 5/26

(54) **STEEL SHEET, RESISTANCE SPOT WELDING METHOD, RESISTANCE SPOT WELDING MEMBER, AND METHOD FOR MANUFACTURING STEEL SHEET**

(30) Priority: 27.11.2023 JP 2023200075
(71) Applicant: JFE Steel Corporation, Tokyo, 100-0011 (JP)
(72) Inventor: TAKASHIMA Katsutoshi, Tokyo 100-0011 (JP); SAWANISHI Chikaumi, Tokyo 100-0011 (JP); KAWABE Nao, Tokyo 100-0011 (JP); KANAZAWA Tomomi, Tokyo 100-0011 (JP); KIM Jingeum, Tokyo 100-0011 (JP)
(74) Representative: Grünecker Patent- und Rechtsanwälte PartG mbB
(86) International application number: PCT/JP2024/027591
(87) International publication number: WO 2025/115291

(57) **Abstract**

A steel sheet is provided that has a tensile strength of 1600 MPa or more, high L-shape tension strength after resistance welding, and also has excellent delayed fracture resistance after resistance welding. The steel sheet has a defined chemical composition, wherein a microstructure at a 1/4 sheet thickness position contains, in volume fraction, ferrite: 0 % to 5 %, retained austenite: 0 % to 5 %, bainite: 0 % to 7 %, and martensite: 93 % or more, wherein an average grain size of ferrite is 3 µm or less, an average grain size of retained austenite is 3 µm or less, an average grain size of bainite is 5 µm or less, and an average grain size of martensite is 7 µm or less, wherein a microstructure in a region 7 µm to 12 µm from a surface in the sheet thickness direction contains a volume fraction of ferrite of 30 % or more, and an average grain size of ferrite is 10 µm or less, and wherein, in a region 50 µm to 100 µm from the surface in the sheet thickness direction, an average number density of carbides having a particle size of 0.10 µm or more is 5 per 100 µm² or more.

## Description

### TECHNICAL FIELD

The present disclosure relates to steel sheets, and in particular, to a steel sheet that can be suitably used as material for structural parts of automobiles and the like. Further, the present disclosure relates to a resistance spot welding method using the steel sheet, a resistance spot welded member, and a method of producing the steel sheet.

### BACKGROUND

In recent years, CO₂ emission regulations have become more stringent due to rising environmental problems, and in the automobile field, there is a demand for weight reduction of automotive bodies to improve fuel efficiency. Therefore, sheet metal thinning of automotive parts by the use of high-strength steel sheets has been promoted, and in recent years, steel sheets having a high tensile strength (TS) of 1600 MPa or more have also been used.

When assembling an automobile, from the standpoint of cost and efficiency, it is common to join parts made from press-formed steel sheets by resistance spot welding (hereinafter also referred to simply as resistance welding). Therefore, in order to secure crashworthiness of automobiles, it is necessary to increase the strength of the steel sheet (base steel sheet) as the material, as well as the strength of the welded portion.

Tensile shear strength (TSS) and cross tension strength (CTS) are widely used as indicators of the strength of resistance welded joints. However, in actual automobile production, flange portions of parts are often resistance welded. Therefore, in order to effectively improve crashworthiness of automobiles, it is necessary to improve the strength in an L-shape tension test (L-shape tension strength, LTS), which is suitable for evaluating the peeling strength of flange welded portions.

Further, steel sheets used in automotive parts and the like are required to have excellent delayed fracture resistance after resistance welding in order to prevent delayed fracture caused by hydrogen entering from the use environment. However, in order to achieve a high tensile strength of 1600 MPa or more, it is necessary to add a large amount of alloying elements, but the addition of alloying elements leads to a degradation in delayed fracture resistance after resistance welding. Accordingly, it has been difficult to achieve both high strength and excellent delayed fracture resistance after resistance welding.

To solve these problems, various techniques have been proposed.

For example, in Patent Literature (PTL) 1, a method is proposed for improving the peeling strength of a welded portion by inserting an insert sheet having specific dimensions between a plurality of overlapping steel sheets and resistance spot welding the steel sheets.

Further, in PTL 2, a method is proposed for improving the strength of a welded portion by carrying out resistance spot welding to form the welded portion and then carrying out subsequent-current application.

### CITATION LIST

### Patent Literature

PTL 1: JP 2020-151756 A
PTL 2: JP 2022-140236 A

### SUMMARY

### (Technical Problem)

According to the methods proposed in PTL 1 and 2, a certain improvement in the strength of welded joints can be observed. However, in both PTL 1 and 2, the tensile strength of the steel sheets used in the tests is up to about 1500 MPa, and it is unclear what effect would be obtained if the method were applied to a high-strength steel sheet having a tensile strength of 1600 MPa or more.

Further, as mentioned above, the problem of delayed fracture becomes prominent in high-strength steel sheets having a tensile strength of 1600 MPa or more, but PTL 1 and 2 do not take the problem of delayed fracture into consideration.

As described above, with the conventional techniques proposed in PTL 1 and 2, it remains difficult to simultaneously achieve a tensile strength of 1600 MPa or more, excellent L-shape tension strength, and excellent delayed fracture resistance.

Further, the method of PTL 1 requires a process of preparing an insert that satisfies defined conditions and inserting the insert between steel sheets when welding, which results in poor productivity. Similarly, the method of PTL 2 also results in poor productivity because subsequent-current application is required after welding. In order to obtain excellent properties without requiring an additional process that decreases productivity, it is necessary to improve resistance weldability of the steel sheets themselves.

The present disclosure is made in view of the above circumstances, and it would be helpful to provide a steel sheet that has a tensile strength of 1600 MPa or more, a high L-shape tension strength after resistance welding, and excellent delayed fracture resistance after resistance welding.

### (Solution to Problem)

As a result of investigations, the inventors have found that the above-mentioned problems can be solved by controlling, in addition to a chemical composition of the steel sheet, the microstructure at a 1/4 sheet thickness position of the steel sheet, the microstructure in a region 7 µm to 12 µm from a surface in the sheet thickness direction, and the average number density of carbides in a region 50 µm to 100 µm from the surface in the sheet thickness direction. In particular, it is considered important to control the volume fraction of ferrite in the region 7 µm to 12 µm from the surface in the sheet thickness direction and the average number density of carbides in the region 50 µm to 100 µm from the surface in the sheet thickness direction, in order to improve properties after resistance welding. The discoveries of the inventors that led to the above conclusions are explained below.

In the L-shape tension test, a crack develops in a fusion zone (nugget) of a resistance spot welded portion, leading to fracture. According to study by the inventors, the tension strength in the L-shape tension test can be improved by changing the microstructure in a corona bond portion around the nugget. Specifically, by softening the corona bond portion, crack propagation resistance is improved, and as a result, high tension strength is obtained in the L-shape tension test.

In order to obtain the above effect, it is sufficient to form a sufficient amount of ferrite in the region 7 µm to 12 µm from the surface in the sheet thickness direction in the steel sheet before resistance welding. By controlling the microstructure of a surface layer of the steel sheet in this way, it is possible to effectively improve the tension strength in an L-shape tension test after resistance welding while maintaining high base metal strength.

Further, the above-mentioned change in the microstructure in the corona bond portion also has an effect of improving delayed fracture resistance after resistance welding. Therefore, in order to improve delayed fracture resistance after resistance welding, it is necessary to form a sufficient amount of ferrite in the region 7 µm to 12 µm deep from the surface in the sheet thickness direction.

In addition, in order to sufficiently improve delayed fracture resistance after resistance welding, it is necessary to precipitate carbides at a sufficient number density in the region 50 µm to 100 µm from the surface in the sheet thickness direction. By allowing C contained in the base metal to be sufficiently precipitated as carbides, the amount of solute C in a heat-affected zone (HAZ) after resistance welding is reduced, resulting in improved delayed fracture resistance.

The present disclosure is based on the above discoveries and primary features are as follows.
1. A steel sheet comprising a chemical composition containing (consisting of), in mass%,
   C: 0.22 % to 0.38 %,
   Si: 0.05 % to 1.35 %,
   Mn: 2.4 % to 3.5 %,
   P: 0.02 % or less,
   S: 0.002 % or less,
   Al: 0.01 % to 0.10 %,
   N: 0.008 % or less,
   B: 0.0002 % to 0.0050 %, and
   at least one selected from the group consisting of Ti: 0.005 % to 0.07 %, Nb: 0.005 % to 0.07 %, and V: 0.005 % to 0.07 %,
   with the balance being Fe and inevitable impurity,
   wherein a microstructure at a 1/4 sheet thickness position comprises,
      in volume fraction,
      ferrite: 0 % to 5 %,
      retained austenite: 0 % to 5 %,
      bainite: 0 % to 7 %, and
      martensite: 93 % or more, wherein
      an average grain size of ferrite is 3 µm or less,
      an average grain size of retained austenite is 3 µm or less,
      an average grain size of bainite is 5 µm or less, and
      an average grain size of martensite is 7 µm or less,
   wherein a microstructure in a region 7 µm to 12 µm from a surface in the sheet thickness direction comprises
      a volume fraction of ferrite of 30 % or more, and
      an average grain size of ferrite is 10 µm or less,
   and wherein, in a region 50 µm to 100 µm from the surface in the sheet thickness direction, an average number density of carbides having a particle size of 0.10 µm or more is 5 per 100 µm² or more.
2. The steel sheet according to 1, above, wherein the chemical composition further contains, in mass%, at least one selected from the group consisting of:
   Sb: 0.02 % or less,
   Cu: 0.50 % or less,
   Ni: 0.50 % or less,
   Cr: 0.50 % or less,
   Mo: 0.50 % or less,
   Sn: 0.30 % or less,
   Ca: 0.0050 % or less, and
   REM: 0.0050 % or less.
3. The steel sheet according to 1 or 2, above, further comprising a zinc or zinc alloy coated or plated layer on at least one surface.
4. A resistance spot welding method of squeezing, by a pair of welding electrodes, a sheet combination including at least one sheet of the steel sheet according to any one of 1 to 3, above, and passing a current while applying an electrode force to join the sheet combination.
5. A resistance spot welded member including at least one sheet of the steel sheet according to any one of 1 to 3, above, in a sheet combination.
6. A method of producing a steel sheet, the method comprising:
   continuous casting of molten steel having the chemical composition according to 1 or 2, above, to obtain a steel slab;
   cooling the steel slab at an average cooling rate of 50 °C/h or more in a temperature range to 600 °C;
   reheating the steel slab after the cooling under conditions including a heating temperature of 1280 °C to 1400 °C and a holding time at the heating temperature of 60 min or longer;
   hot rolling the steel slab after the reheating under conditions including a rolling finish temperature from 850 °C to 950 °C, to obtain a hot-rolled steel sheet;
   cooling the hot-rolled steel sheet to a cooling stop temperature of 460 °C or lower at an average cooling rate of 80 °C/s or more;
   coiling the hot-rolled steel sheet after the cooling at a coiling temperature of 460 °C or less;
   pickling the hot-rolled steel sheet after the coiling;
   heat-treating the hot-rolled steel sheet after the pickling at a heat treatment temperature of 300 °C to 700 °C to obtain a heat-treated hot-rolled steel sheet;
   cold rolling the heat-treated hot-rolled steel sheet to obtain a cold-rolled steel sheet; and
   annealing the cold-rolled steel sheet under conditions including a dew point higher than -15 °C in a temperature range of 600 °C to 980 °C, wherein,
   in the annealing, the cold-rolled steel sheet is
      heated to 650 °C at an average heating rate of 12 °C/s or more,
      heated to an annealing temperature of 830 °C to 980 °C at an average heating rate of less than 12 °C/s,
      held at the annealing temperature for a holding time from 20 s to 360 s, and
      cooled from the annealing temperature to room temperature at an average cooling rate of 3 °C/s or more.
7. The method of producing a steel sheet according to 6, above, the method further comprising electroplating the steel sheet after the annealing to form a zinc or zinc alloy plated layer on at least one surface of the steel sheet.
8. A method of producing a steel sheet, the method comprising:
   continuous casting of molten steel having the chemical composition according to 1 or 2, above, to obtain a steel slab;
   cooling the steel slab at an average cooling rate of 50 °C/h or more in a temperature range to 600 °C;
   reheating the steel slab after the cooling under conditions including a heating temperature of 1280 °C to 1400 °C and a holding time at the heating temperature of 60 min or longer;
   hot rolling the steel slab after the reheating under conditions including a rolling finish temperature from 850 °C to 950 °C, to obtain a hot-rolled steel sheet;
   cooling the hot-rolled steel sheet to a cooling stop temperature of 460 °C or lower at an average cooling rate of 80 °C/s or more;
   coiling the hot-rolled steel sheet after the cooling at a coiling temperature of 460 °C or less;
   pickling the hot-rolled steel sheet after the coiling;
   heat-treating the hot-rolled steel sheet after the pickling at a heat treatment temperature of 300 °C to 700 °C to obtain a heat-treated hot-rolled steel sheet;
   cold rolling the heat-treated hot-rolled steel sheet to obtain a cold-rolled steel sheet;
   annealing the cold-rolled steel sheet under conditions including a dew point higher than -15 °C in a temperature range of 600 °C to 980 °C;
   hot-dip coating the cold-rolled steel sheet after the annealing to form a zinc or zinc alloy coated layer on at least one surface of the steel sheet; and
   cooling the steel sheet after the hot-dip coating to room temperature at an average cooling rate of 3 °C/s or more, wherein,
   in the annealing, the cold-rolled steel sheet is
      heated to 650 °C at an average heating rate of 12 °C/s or more,
      heated to an annealing temperature of 830 °C to 980 °C at an average heating rate of less than 12 °C/s,
      held at the annealing temperature for a holding time from 20 s to 360 s, and
      cooled from the annealing temperature up to entry into a hot-dip coating bath at an average cooling rate of 3 °C/s or more.
9. The method of producing a steel sheet according to 8, above, wherein an alloying treatment is carried out after the hot-dip coating, prior to the cooling to room temperature.

### (Advantageous Effect)

According to the present disclosure, it is possible to provide a steel sheet that has both a tensile strength of 1600 MPa or more and high L-shape tension strength after resistance welding, and further has excellent delayed fracture resistance after resistance welding. Hereinafter, the L-shape tension strength and the delayed fracture resistance may be collectively referred to as resistance weldability.

### DETAILED DESCRIPTION

The following describes embodiments of the present disclosure. The following merely describes preferred embodiments of the present disclosure, and the present disclosure is by no means limited to the embodiments described. Further, the unit of content "%" represents "mass%" unless otherwise specified.

### [Chemical composition]

The steel sheet according to the present disclosure has the chemical composition described above. The reasons for limiting the chemical composition are described below.

### C: 0.22 % to 0.38 %

C is an element that is effective in increasing the strength of the steel sheet, and also contributes to the formation of martensite. Further, C is also a component that forms carbides, which is one important element according to the present disclosure. When C content is less than 0.22 %, the required strength and martensite volume fraction cannot be secured. The C content is therefore 0.22 % or more. The C content is preferably 0.23 % or more. The C content is more preferably 0.24 % or more. On the other hand, when the C content is excessively high, the toughness of the nugget after resistance welding decreases, resulting in a decrease in L-shape tension strength. The C content is therefore 0.38 % or less. The C content is preferably 0.34 % or less. The C content is more preferably 0.33 % or less.

### Si: 0.05 % to 1.35 %

Si is an element that has an effect of improving resistance weldability. This is because addition of Si mitigates Mn segregation, and as a result, hardness variation in the thickness direction of the steel sheet is alleviated. To obtain the above effects, Si content is 0.05 % or more. The Si content is preferably 0.15 % or more. The Si content is more preferably 0.25 % or more. On the other hand, excessive addition of Si causes liquid metal embrittlement during resistance spot welding. The Si content is therefore 1.35 % or less. The Si content is preferably 1.25 % or less. The Si content is more preferably 1.15 % or less.

### Mn: 2.4 % to 3.5 %

Mn is an element that has an effect of improving the strength of the steel sheet by stabilizing martensite formation and solid solution strengthening. Further, Mn has an effect of stabilizing austenite and is an element required for securing the volume fraction of martensite. In order to obtain these effects, Mn content is 2.4 % or more. On the other hand, when Mn is contained in excess, the toughness of a nugget after spot welding decreases, and as a result, the L-shape tension strength decreases. Further, when Mn is contained in excess, when hydrogen enters the steel sheet, grain boundary sliding constraint increases, making it easier for cracks to propagate at grain boundaries. As a result, the delayed fracture resistance after resistance welding is decreased. The Mn content is therefore 3.5 % or less. The Mn content is preferably 3.2 % or less.

### P: 0.02 % or less

When P is excessive, P segregates significantly at grain boundaries, embrittling the grain boundaries. As a result, the resistance weldability is decreased. The P content is therefore 0.02 % or less. The P content is preferably 0.015 % or less. The P content is more preferably 0.012 % or less. A lower limit of the P content is not particularly limited, and may be 0 %. However, excessive decrease increases the steelmaking cost. The P content is therefore preferably 0.002 % or more.

### S: 0.002 % or less

When S is excessive, the resistance weldability decreases. This is because the amount of sulfides such as MnS produced increases with an increase in S content, and cracks are generated from the sulfides when hydrogen enters. The S content is therefore 0.002 % or less. The S content is preferably 0.0015 % or less. The S content is more preferably 0.0012 % or less. A lower limit of the S content is not particularly limited, and may be 0 %. However, excessive decrease increases the steelmaking cost. The S content is therefore preferably 0.0002 % or more.

### Al: 0.01 % to 0.10 %

Al is a necessary element for deoxidation. When Al content is less than 0.01 %, a deoxidizing effect is insufficient. The Al content is therefore 0.01 % or more. The Al content is preferably 0.02 % or more. On the other hand, when the Al content is higher than 0.10 %, excessive ferrite phase is formed during annealing, and therefore securing strength becomes difficult. Al content is therefore 0.10 % or less. The Al content is preferably 0.08 % or less. The Al content is more preferably 0.05 % or less.

### N: 0.008 % or less

When N is excessive, the resistance weldability decreases. This is because the amount of coarse nitrides produced increases with an increase in the N content, and cracks are generated from the nitrides when hydrogen enters. This tendency becomes pronounced when N content is 0.008 % or more. The N content is therefore 0.008 % or less. The N content is preferably 0.007 % or less. The N content is more preferably 0.005 % or less. A lower limit of the N content is not particularly limited, and may be 0 %. However, excessive decrease increases the steelmaking cost. The N content is therefore preferably 0.0005 % or more. The N content is more preferably 0.001 % or more.

### B: 0.0002 % to 0.0050 %

B is an element that improves hardenability and contributes to high strength by forming martensite. Further, B improves hardenability without lowering the martensitic transformation start temperature, and is therefore useful for forming carbides. To achieve these effects, B content is 0.0002 % or more. The B content is preferably 0.0004 % or more. On the other hand, when the B content exceeds 0.0050 %, the effects saturate, and therefore the B content is 0.0050 % or less. The B content is preferably 0.0040 % or less. The B content is more preferably 0.0035 % or less.

The steel sheet of the present disclosure has a chemical composition containing at least one element selected from the group consisting of Ti, Nb, and V, in the following amounts. Ti, Nb, and V are elements that share a common function of improving the resistance weldability by forming fine carbides.

### Ti: 0.005 % to 0.07 %

Ti forms fine carbides, thereby improving the delayed fracture resistance after resistance welding. Further, Ti also improves the delayed fracture resistance after resistance welding by increasing hydrogen overvoltage. When Ti is added, in order to exert these effects, the Ti content is 0.005 % or more. The Ti content is preferably 0.008 % or more. On the other hand, when a large amount of Ti is added, elongation decreases significantly. The Ti content is therefore 0.07 % or less. The Ti content is preferably 0.05 % or less.

### Nb: 0.005 % to 0.07 %

Nb forms fine carbides, thereby improving the delayed fracture resistance of resistance spot welded portions. When Nb is added, in order to obtain this effect, Nb content is 0.005 % or more. The Nb content is preferably 0.01 % or more. On the other hand, adding a large amount of Nb not only significantly decreases elongation but also causes slab cracking after continuous casting. The Nb content is therefore 0.07 % or less. The Nb content is preferably 0.05 % or less.

### V: 0.005 % to 0.07 %

V forms fine carbides, thereby improving the delayed fracture resistance of resistance spot welded portions. When V is added, to obtain this effect, V content is 0.005 % or more. On the other hand, even when a large amount of V is added, a strength improving effect for any amount exceeding 0.07 % is small, and in addition, the alloy cost increases. The V content is therefore 0.07 % or less. The V content is preferably 0.06 % or less. The V content is more preferably 0.05 % or less.

The steel sheet according to an embodiment of the present disclosure has a chemical composition that consists of the above components, with the balance being Fe and inevitable impurity.

Examples of the inevitable impurity include Co, Zn, Ta, Mg, and Zr. When Co is included as inevitable impurity, Co content is preferably 0.10 % or less. When Zn is included as inevitable impurity, Zn content is preferably 0.10 % or less. When Ta is included as inevitable impurity, Ta content is preferably 0.10 % or less. When Mg is included as inevitable impurity, Mg content is preferably 0.10 % or less. When Zr is included as inevitable impurity, Zr content is preferably 0.10 % or less.

Further, in addition to the above components, the chemical composition of the steel sheet according to another embodiment of the present disclosure may optionally contain at least one of the following components. All of the following elements may optionally be added and are therefore not required elements. Accordingly, a lower limit of content may be 0 %.

### Sb: 0.02 % or less

Sb is an element that has an effect of strengthening grain boundaries by segregating at the grain boundaries. The addition of Sb can further improve cross tension strength. However, when Sb content is higher than 0.02 %, the formation of ferrite phase in the surface layer of the steel sheet is suppressed, and the microstructure in the surface layer cannot be made as desired. Therefore, when Sb is added, the Sb content is 0.02 % or less. The Sb content is preferably 0.015 % or less. Although no lower limit is placed on the Sb content, in terms of enhancing the effect of adding Sb, the Sb content is preferably 0.001 % or more. The Sb content is more preferably 0.002 % or more.

### Cu: 0.50 % or less

Cu is an element that has an effect of increasing the hydrogen overvoltage and thus further improving the delayed fracture resistance after resistance welding. However, when Cu content exceeds 0.50 %, the effect becomes saturated and surface defects are more likely to occur. Therefore, when Cu is added, the Cu content is 0.50 % or less. From the viewpoint of enhancing the effect of Cu addition, the Cu content is preferably 0.005 % or more.

### Ni: 0.50 % or less

Ni, like Cu, is an element that has an effect of increasing the hydrogen overvoltage and further improving the delayed fracture resistance. Further, when added together with Cu, Ni has an effect of suppressing surface defects caused by Cu. However, when Ni content exceeds 0.50 %, the effect becomes saturated. Therefore, when Ni is added, the Ni content is 0.50 % or less. From the viewpoint of enhancing the effect of Ni addition, the Ni content is preferably 0.005 % or more.

### Cr: 0.50 % or less

Cr is an element that contributes to further increasing strength by forming a hard phase. However, when Cr content exceeds 0.50 %, surface defects become more likely. Therefore, when Cr is added, the Cr content is 0.50 % or less. The Cr content is preferably 0.45 % or less. On the other hand, from the viewpoint of enhancing the effect of Cr addition, the Cr content is preferably 0.02 % or more. The Cr content is more preferably 0.05 % or more.

### Mo: 0.50 % or less

Mo, like Cr, is an element that contributes to further increasing strength by forming a hard phase. Further, a portion of Mo contributes to further strengthening by forming carbides. However, when Mo content exceeds 0.50 %, the effect is saturated and the effect is not commensurate with the increase in cost. Therefore, when Mo is added, the Mo content is 0.50 % or less. The Mo content is preferably 0.45 % or less. On the other hand, from the viewpoint of enhancing the effect of adding Mo, the Mo content is preferably 0.02 % or more. The Mo content is more preferably 0.05 % or more.

### Sn: 0.30 % or less

Sn is an element that increases the hydrogen overvoltage of the steel sheet, thereby further improving the delayed fracture resistance. However, when Sn content exceeds 0.30 %, the effect is saturated and ductility is reduced. Therefore, when Sn is added, the Sn content is 0.30 % or less. The Sn content is preferably 0.25 % or less. On the other hand, from the viewpoint of enhancing the effect of adding Sn, the Sn content is preferably 0.005 % or more. The Sn content is more preferably 0.01 % or more.

### Ca: 0.0050 % or less

Ca is an element that contributes to further improving the delayed fracture resistance after resistance welding, by spheroidizing sulfides. However, when Ca content exceeds 0.0050 %, the effect saturates. Therefore, when Ca is added, the Ca content is 0.0050 % or less. From the viewpoint of enhancing the effect of Ca addition, the Ca content is preferably 0.0005 % or more.

### REM: 0.0050 % or less

REM (rare earth metals), like Ca, are elements that spheroidize sulfides, thereby further improving the delayed fracture resistance after resistance welding. However, when REM content exceeds 0.0050 %, the effect is saturated, and therefore, when a REM is added, the REM content is 0.0050 % or less. From the viewpoint of enhancing the effect of REM addition, the REM content is preferably 0.0005 % or more.

### [Microstructure]

In the steel sheet of the present disclosure, the microstructure at a 1/4 sheet thickness position and the microstructure at a position in a region 7 µm to 12 µm from a surface of the steel sheet in the sheet thickness direction need to each satisfy specific conditions. The reasons for this are described below. The "1/4 sheet thickness position" refers to a position at a depth of 1/4 of the sheet thickness t of the steel sheet from a surface of the steel sheet, and may also be expressed as the 1/4 t position.

Hereinafter, tempered martensite is also defined to be included in the term "martensite". This is because it is difficult to distinguish between martensite and tempered martensite in the microstructure of the steel sheet according to the present disclosure. Further, the term "tempered martensite" includes not only tempered martensite formed by self-tempering during the cooling process in annealing, but also tempered martensite formed by carrying out a tempering treatment after cooling to room temperature.

### (Microstructure at 1/4 sheet thickness position)

### Ferrite: 0 % to 5 %

When the volume fraction of ferrite at the 1/4 sheet thickness position is higher than 5%, the desired tensile strength cannot be obtained. The volume fraction of ferrite at the 1/4 sheet thickness position is therefore 5 % or less. The volume fraction is preferably 3 % or less. The volume fraction is more preferably 1 % or less. On the other hand, from the viewpoint of strength, the lower the volume fraction of ferrite, the better, and therefore the lower limit of the volume fraction of ferrite is 0 %.

### Average grain size of ferrite: 3 µm or less

When the average grain size of ferrite at the 1/4 sheet thickness position is larger than 3 µm, the delayed fracture resistance deteriorates. This is because cracks due to hydrogen embrittlement become more likely to occur at the interface between ferrite and martensite from the HAZ softened portion to the base metal after resistance welding. The average grain size of ferrite at the 1/4 sheet thickness position is therefore 3 µm or less. The average grain size is preferably 2.5 µm or less. On the other hand, from the viewpoint of the delayed fracture resistance, the smaller the average grain size of ferrite, the better, so there is no particular lower limit to the average grain size. However, from the viewpoint of ease of production, the average grain size of ferrite is preferably 0.2 µm or more. The average grain size is more preferably 0.5 µm or more. The average grain size is even more preferably 1.0 µm or more.

### Retained austenite: 0 % to 5 %

When the volume fraction of retained austenite at the 1/4 sheet thickness position is higher than 5 %, the delayed fracture resistance degrades. This is because when cold press forming is carried out on a steel sheet, the retained austenite transforms into martensite having a high dislocation density, which makes it easier for cracks to form due to hydrogen embrittlement from the softened HAZ to the base metal after resistance welding. The volume fraction of retained austenite at the 1/4 sheet thickness position is therefore 5 % or less. The volume fraction is preferably 4 % or less. On the other hand, from the viewpoint of delayed fracture resistance, the lower the volume fraction of retained austenite, the better, and therefore the lower limit of the volume fraction of retained austenite is 0 %.

### Average grain size of retained austenite: 3 µm or less

When the average grain size of retained austenite at the 1/4 sheet thickness position is larger than 3 µm, the delayed fracture resistance degrades. This is because martensite is more likely to be generated during cold press forming due to the influence of the C distribution in the retained austenite. The average grain size of the retained austenite at the 1/4 sheet thickness position is therefore 3 µm or less. On the other hand, there is no particular lower limit to the average grain size. However, when the average grain size is 0.3 µm, the contribution to elongation is large, and therefore the average grain size is preferably 0.3 µm or more. The average grain size is more preferably 1 µm or more. The average grain size is even more preferably 2 µm or more.

### Bainite: 0 % to 7 %

When the volume fraction of bainite at the 1/4 sheet thickness position is higher than 7 %, the desired tensile strength cannot be obtained. The volume fraction of bainite at the 1/4 sheet thickness position is therefore 7 % or less. The volume fraction is preferably 5 % or less. On the other hand, from the viewpoint of strength, the lower the volume fraction of bainite, the better, and therefore the lower limit of the volume fraction of bainite is 0 %.

### Average grain size of bainite: 5 µm or less

When the average grain size of bainite at the 1/4 sheet thickness position is larger than 5 µm, the delayed fracture resistance degrades. This is because cracks due to hydrogen embrittlement become more likely to occur at the interface between bainite and martensite from the HAZ softened portion to the base metal after resistance welding. The average grain size of bainite at the 1/4 sheet thickness position is therefore 5 µm or less. The average grain size is preferably 4 µm or less. On the other hand, from the viewpoint of the delayed fracture resistance, the smaller the average grain size of bainite, the better, so there is no particular lower limit to the average grain size. However, from the viewpoint of ease of production, the average grain size of bainite is preferably 0.1 µm or more. The average grain size is more preferably 0.5 µm or more. The average grain size is even more preferably 1.0 µm or more.

### Martensite: 93 % or more

In order to secure a desired tensile strength, the volume fraction of martensite at the 1/4 sheet thickness position needs to be 93 % or more. The volume fraction of martensite at the 1/4 sheet thickness position is therefore 93 % or more. The volume fraction is preferably 95 % or more. On the other hand, an upper limit of the volume fraction of martensite at the 1/4 sheet thickness position is not particularly limited, and may be 100 %.

### Average grain size of martensite: 7 µm or less

When the average grain size of martensite at the 1/4 sheet thickness position is larger than 7 µm, the crystal grains become coarse after resistance welding, and the L-shape tension strength decreases. The average grain size of martensite at the 1/4 sheet thickness position is therefore 7 µm or less. The average grain size is preferably 6 µm or less. On the other hand, from the viewpoint of the L-shape tension strength, the smaller the average grain size of martensite, the better, so there is no particular lower limit to the average grain size. However, from the viewpoint of ease of production, the average grain size of martensite is preferably 1 µm or more. The average grain size is more preferably 3 µm or more. The average grain size is even more preferably 4 µm or more.

According to an embodiment of the present disclosure, the microstructure at the 1/4 sheet thickness position may consist of,
in volume fraction,
ferrite: 0 % to 5 %,
retained austenite: 0 % to 5 %,
bainite: 0 % to 7 %, and
martensite: 93 % or more.

Further, the microstructure may further contain other structures. Here, the other structures are microstructures other than ferrite, retained austenite, bainite, and martensite. An example of another structure may be pearlite. The volume fraction of the other structures may be 7 % or less. The volume fraction is preferably 3 % or less.

That is, according to an embodiment of the present disclosure, the microstructure at the 1/4 sheet thickness position may consist of,
in volume fraction,
ferrite: 0 % to 5 %,
retained austenite: 0 % to 5 %,
bainite: 0 % to 7 %,
martensite: 93 % or more, and
other structure: 0 % to 7 %.

### (Microstructure in region 7 µm to 12 µm from surface in sheet thickness direction)

### Ferrite: 30 % or more

When the volume fraction of ferrite in the region 7 µm to 12 µm from the surface of the steel sheet in the sheet thickness direction is less than 30 %, the desired L-shape tension strength and delayed fracture resistance cannot be obtained. As mentioned above, this is thought to be because forming a sufficient amount of ferrite in the region softens the corona bond portion after resistance welding, thereby improving crack propagation resistance. Accordingly, the volume fraction of ferrite in the region 7 µm to 12 µm from the surface of the steel sheet in the sheet thickness direction is 30 % or more. The volume fraction is preferably 45 % or more. The volume fraction is more preferably 60 % or more. On the other hand, an upper limit of the volume fraction of ferrite is not particularly limited, and may be 100 %. The volume fraction of ferrite may be, for example, 90 % or less, or 85 % or less.

### Average grain size of ferrite: 10 µm or less

When the average grain size of ferrite in the region 7 µm to 12 µm from the surface of the steel sheet in the sheet thickness direction is greater than 10 µm, the microstructure in the corona bond portion after resistance welding becomes coarse, and therefore the delayed fracture resistance degrades. Accordingly, the average grain size of ferrite in the region 7 µm to 12 µm from the surface of the steel sheet in the sheet thickness direction is 10 µm or less. The average grain size is preferably 9 µm or less. The average grain size is more preferably 8 µm or less. On the other hand, from the viewpoint of the delayed fracture resistance, the smaller the average grain size of ferrite, the better, so there is no particular lower limit to the average grain size. However, from the viewpoint of ease of production, the average grain size of ferrite is preferably 1 µm or more. The average grain size is more preferably 2 µm or more. The average grain size is even more preferably 3 µm or more.

Further, the microstructure may also contain other structures. Here, the other structures are microstructures other than ferrite, such as bainite, pearlite, retained austenite, martensite, and cementite. From the viewpoint of further increasing the tensile strength, it is preferable that 50 % or more of the balance other than ferrite is at least one of bainite or martensite. In other words, it is preferable that the total volume fraction of bainite and martensite in the residual microstructure other than ferrite is 50 % or more. An upper limit of the total volume fraction of bainite and martensite in the residual microstructure is not particularly limited, and may be 100 %. In other words, according to an embodiment of the present disclosure, the microstructure in the region from the surface to 7 µm to 12 µm in the sheet thickness direction may be a structure consisting of 30 % or more ferrite by volume fraction and one or both of bainite and martensite as the balance.

### [Carbides]

### Average number density: 5 per 100 µm² or more

When the average number density of carbides having a grain size of 0.10 µm or more in a region 50 µm to 100 µm from a surface of the steel sheet in the sheet thickness direction is less than 5 per 100 µm² of a cross-section, the delayed fracture resistance after resistance welding degrades. This is because the carbides having a particle size of 0.10 µm or more present in the region function as hydrogen traps, improving the hydrogen embrittlement resistance of the nugget and the HAZ. Accordingly, the average number density of carbides having a particle size of 0.10 µm or more in the region 50 µm to 100 µm from the surface of the steel sheet in the sheet thickness direction is 5 per 100 µm² or more. The average number density is preferably 7 per 100 µm² or more. The average number density is more preferably 10 per 100 µm² or more. On the other hand, from the viewpoint of the delayed fracture resistance, the higher the average number density, the better, and therefore an upper limit of the average number density is not particularly limited. The average number density may be, for example, 40 per 100 µm² or less, or 30 per 100 µm² or less.

Here, the type of the carbide is not particularly limited, but the steel sheet of the present disclosure contains at least one selected from the group consisting of Ti, Nb, and V, as described above. These elements are likely to form carbides, and therefore the steel sheet of the present disclosure may contain, as the carbides, at least one of Ti carbides, Nb carbides, or V carbides in addition to Fe carbides (cementite). The average number density of the carbides can be measured by a transmission electron microscope (TEM) and energy dispersive X-ray spectroscopy (EDS), and more specifically, can be measured by the method described in the EXAMPLES section.

### [Zinc or zinc alloy coated or plated layer]

The steel sheet according to the present disclosure may be a cold-rolled steel sheet without a coated or plated layer on any surface, but preferably includes a zinc or zinc alloy coated or plated layer on at least one surface.

As the zinc or zinc alloy coated or plated layer, either a zinc coated or plated layer or a zinc alloy coated or plated layer may be used. In other words, the steel sheet according to the present disclosure may be a galvanized steel sheet, and may be a galvannealed steel sheet. The zinc alloy coated or plated layer is not particularly limited and a coated or plated layer made of any zinc alloy may be used. As the zinc alloy coated or plated layer, it is preferable to use a zinc alloy coated or plated layer that has a composition selected from the group consisting of Zn-Al, Zn-Al-Mg, Zn-Al-Si, Zn-Al-Mg-Si, and Zn-Al-Mg-Ni.

The zinc or zinc alloy coated or plated layer may be formed by any method. For example, the zinc or zinc alloy coated or plated layer may be a hot-dip galvanized layer, a hot-dip galvannealed layer, or an electroplated zinc or zinc alloy layer. In other words, the steel sheet according to the present disclosure may be a hot-dip galvanized steel sheet, a hot-dip galvannealed steel sheet, or a zinc or zinc alloy electroplated steel sheet.

Coating weight of the zinc or zinc alloy coated or plated layer is not particularly limited. From the viewpoint of corrosion resistance and ease of controlling the coating weight, the coating weight is preferably 25 g/m² or more per side of the steel sheet. On the other hand, from the viewpoint of adhesion of the coated or plated layer, the coating weight is preferably 80 g/m² or less per side of the steel sheet.

### [Pre-coating layer]

When the steel sheet has a zinc or zinc alloy coated or plated layer, the steel sheet may further have a pre-coating layer between the steel sheet (base steel sheet) and the zinc or zinc alloy coated or plated layer.

As the pre-coating layer, a coated or plated layer of any composition may be used without any particular limitation. The pre-coating layer is preferably an Fe-based coated or plated layer. The pre-coating layer is more preferably an Fe-based electroplated layer.

The Fe-based coated or plated layer may be, for example, an Fe coated or plated layer or an Fe alloy coated or plated layer. Here, an Fe coated or plated layer is a coated or plated layer consisting of Fe and inevitable impurity, also called a "pure Fe coated or plated layer". On the other hand, as the Fe alloy coated or plated layer, a coated or plated layer made of any Fe alloy may be used without any particular limitation. The Fe alloy coated or plated layer may, for example, be a coated or plated layer made of one or more alloys selected from the group consisting of Fe-B alloy, Fe-C alloy, Fe-P alloy, Fe-N alloy, Fe-O alloy, Fe-Ni alloy, Fe-Mn alloy, Fe-Mo alloy, and Fe-W alloy.

The Fe-based electroplated layer according to an embodiment of the present disclosure preferably has a chemical composition containing at least one selected from the group consisting of B, C, P, N, O, Ni, Mn, Mo, Zn, W, Pb, Sn, Cr, V, and Co, to a total of 10 % or less, with the balance consisting of Fe and inevitable impurity. Setting the total amount of elements other than Fe to 10 % or less can prevent a decrease in electrolytic efficiency, making it possible to form an Fe-based electroplated layer at low cost.

The Fe-based coated or plated layer functions as a soft layer, and therefore the Fe-based coated or plated layer can relieve stress imparted to the steel sheet surface during welding. In addition to decreasing residual stress in a resistance welded portion, the presence of an Fe-based coated or plated layer allows diffusible hydrogen to efficiently escape from the steel sheet surface, and therefore improves delayed fracture resistance.

Coating weight of the Fe-based coated or plated layer is not particularly limited. From the viewpoint of enhancing the above effect, per side of the steel sheet, the coating weight is preferably 0.5 g/m² or more. The coating weight is more preferably 1.0 g/m² or more. On the other hand, from a cost perspective, per side, the coating weight of the Fe-based coated or plated layer is preferably 60 g/m² or less. The coating weight is more preferably 50 g/m² or less. The coating weight is even more preferably 40 g/m² or less. The coating weight is most preferably 30 g/m² or less.

The coating weight of the Fe-based coated or plated layer is measured as follows. A sample of 10 mm × 15 mm in size is taken from the steel sheet after the zinc or zinc alloy coated or plated layer is formed and embedded in resin to obtain a cross-sectional embedded sample. The thickness of the Fe-based coated or plated layer is determined by observing any three locations on the same cross-section using a scanning electron microscope (SEM). The accelerating voltage in the SEM observation may be 15 kV. Further, the magnification during the SEM observation may be 2000 times to 10,000 times, depending on the thickness of the Fe-based coated or plated layer. The average value of the thicknesses measured at the three locations is multiplied by the specific gravity of iron to convert to the coating weight per side of the Fe-based coated or plated layer.

By satisfying the above conditions, the steel sheet according to the present disclosure has both a tensile strength of 1600 MPa or more and high L-shape tension strength after resistance welding, and further has excellent delayed fracture resistance after resistance welding. More specifically, a high L-shape tension strength of 1.5 kN or more can be achieved after resistance spot welding. Further, even when resistance spot welded joints produced using the steel sheet according to the present disclosure are subjected to the following treatment and then hydrogen charged, delayed fracture does not occur.
- Left in air at room temperature (20 °C) for 24 h.
- While immersed in a 3 % NaCl + 0.5 % NH₄SCN aqueous solution, cathodic electrolytic charging is carried out at a current density of 0.06 mA/cm² for 72 h.

### [Spot welding method]

In the spot welding method according to an embodiment of the present disclosure, a sheet combination including at least one sheet of the steel sheet described above is squeezed between a pair of welding electrodes and joined by passing a current while applying electrode force. The conditions under which spot welding is carried out are not particularly limited, and typical welding conditions can be employed.

For example, two steel sheets are overlapped to form a sheet combination. Next, a pair of welding electrodes squeezes the sheet combination from above and below, and current is passed under defined welding conditions while applying electrode force. This allows the steel sheets comprising the sheet combination to be joined together to form a resistance spot welded member. When a cold-rolled steel sheet and a galvanized steel sheet are overlapped to make a sheet combination, the steel sheets may be overlapped so that the side that has the zinc or zinc alloy coated layer of the galvanized steel sheet may face the cold-rolled steel sheet.

The resistance spot welding method according to an embodiment of the present disclosure may include a main current passage process in which the pair of welding electrodes are used to squeeze the sheet combination and pass current while applying pressure to form a nugget.

The current passage conditions and pressure conditions for forming nuggets in the main current passage process are not particularly limited. From the viewpoint of application to structural parts of automobiles and the like, the current passage conditions and pressure conditions are preferably adjusted to the following ranges.

For example, a current value of the main current passage process, in order to obtain a stable nugget diameter, can preferably be from 3.0 kA to 15.0 kA. The nugget diameter employed for a spot welded portion in an automotive steel sheet is typically from 3.0√t to 6.0√t (where t is the thinnest sheet thickness in the sheet combination), and when the current value is too small, the target nugget diameter cannot be stably obtained. On the other hand, when the current value of the main current passage process is increased outside of the above range, the nugget diameter may become too large, or the degree of melting of the steel sheet may increase, and a molten welded portion may be expelled (splashed) out of the sheet, resulting in a smaller nugget diameter.

The current passage time of the main current passage process is preferably from 0.18 s to 1.0 s. This, as with the current value for the main current passage process, is the time required to obtain the target nugget diameter. When the current passage time of the main current passage process is less than 0.18 s, a nugget is less likely to form. On the other hand, when the current passage time of the main current passage process exceeds 1.0 s, the nugget diameter may become larger, and there is a concern that construction workability may deteriorate. However, as long as the required nugget diameter is obtained, the current passage time tw of the main current passage process may be shorter or longer than the above preferred range.

The electrode force applied in the main current passage process is preferably 2.0 kN or more. The electrode force is preferably 9.0 kN or less. When the electrode force in the main current passage process is too large, the current passage area expands, which tends to make securing the nugget diameter difficult. On the other hand, when the electrode force in the main current passage process is too small, the current passage area becomes smaller and expulsion is more likely to occur. Accordingly, the electrode force F in the main current passage process is preferably in the above preferred range. The electrode force may be limited by apparatus capacity. However, as long as the required nugget diameter is obtained, the electrode force F in the main current passage process may be lower or higher than the above preferred range.

In the resistance spot welding method according to an embodiment of the present disclosure, subsequent-current may be applied after the main current passage process described above. The subsequent-current may be applied under any conditions without particular limitations, but the current value for the subsequent-current is preferably higher than the current value in the main current passage process. Specifically, at least 1.1 times the current value in the main current passage process is preferred. Further, the welding time of the subsequent-current is preferably 1.0 s or less. The subsequent-current may be carried out in multiple stages, in which case the total current passage time in the subsequent-current is preferably 1.0 s or less.

Further, a tempering process may be carried out after the main current passage process to temper an area around the nugget. The conditions of the tempering process are not particularly limited. A current value in the tempering process is preferably lower than the current value in the main current passage process, specifically, preferably at most 0.9 times the current value in the main current passage process. Further, the current passage time in the tempering process is preferably 2.0 s or less.

### [Resistance spot welded member]

The resistance spot welded member according to an embodiment of the present disclosure is a resistance spot welded member that includes at least one sheet of the steel sheet in a sheet combination. The resistance spot welded member may be produced by a typical resistance spot welding method, as described above.

### [Method of producing steel sheet]

The following describes the method of producing a steel sheet according to the present disclosure. As mentioned above, the steel sheet according to the present disclosure may be a cold-rolled steel sheet without a coated or plated layer on a surface, and may be a zinc or zinc alloy coated or plated steel sheet that has a zinc or zinc alloy coated or plated layer on a surface. Further, the zinc or zinc alloy coated or plated steel sheet may be an electroplated steel sheet, a hot-dip galvanized steel sheet, or a hot-dip galvannealed steel sheet. Therefore, the following is a description of preferred production methods for each case.

### • First embodiment

According to the first embodiment of the present disclosure, a steel sheet that satisfies the conditions mentioned above can be produced by sequentially carrying out the following processes using molten steel that has the chemical composition mentioned above as the starting material. When no coating or plating is applied after annealing, a steel sheet without a coated or plated layer on any surface (cold-rolled steel sheet) is obtainable.
(1) Continuous casting
(2) Cooling
(3) Reheating
(4) Hot rolling
(5) Cooling
(6) Coiling
(7) Pickling
(8) Heat treatment
(9) Cold rolling
(10) Annealing

### (1) Continuous casting

First, molten steel having the chemical composition described above is continuously cast to obtain a steel slab. Continuous casting has higher production efficiency than mold casting. The continuous casting may be carried out using any continuous casting machine, but a vertical-bending-type continuous casting machine is preferably used. The vertical-bending-type continuous casting machine offers an excellent balance between apparatus cost and surface quality of the obtained steel slab. Further, the vertical-bending-type continuous casting machine also has an effect of excellent surface crack suppression.

### (2) Cooling

### • Average cooling rate: 50 °C/s or more

Next, the steel slab obtained by the continuous casting is cooled. In the cooling, when the average cooling rate in a temperature range to 600 °C is less than 50 °C/h, segregation of Mn is promoted, and therefore the delayed fracture resistance after resistance welding degrades. Accordingly, the steel slab is cooled under the condition that the average cooling rate in the temperature range to 600 °C is 50 °C/h or more.

According to the present disclosure, the average cooling rate in the temperature range to 600 °C is controlled as described above, and a cooling stop temperature is not particularly limited. In other words, cooling is possible to any temperature that is 600 °C or lower. For example, the steel slab may be cooled to room temperature and then reheated and hot rolled, or the cooling may be stopped at a temperature higher than room temperature as a warm slab that is then reheated and hot rolled.

### (3) Reheating

Next, the steel slab after the cooling is reheated. By reheating, precipitates such as Ti precipitates, Nb precipitates, and V precipitates in the steel can be redissolved.

### • Heating temperature: 1280 °C to 1400 °C

When the heating temperature in the reheating is lower than 1280 °C, the precipitates cannot be sufficiently redissolved and coarse precipitates remain after final annealing. As a result, the delayed fracture resistance after resistance welding degrades. The heating temperature is therefore 1280 °C or higher. On the other hand, when the heating temperature is higher than 1400 °C, crystal grains coarsen. As a result, the desired crystal grain size cannot be obtained after final annealing, and the resistance weldability decreases. The heating temperature is therefore 1400 °C or less. The heating temperature is preferably 1350 °C or less.

### • Holding time: 60 min or more

When the holding time in the reheating is less than 60 min, precipitates cannot be sufficiently redissolved and coarse precipitates remain after final annealing. As a result, the resistance weldability is decreased. The holding time is therefore 60 min or more. On the other hand, an upper limit of the holding time is not particularly limited. From the viewpoint of productivity, the holding time is preferably 180 min or less. The holding time is more preferably 150 min or less.

### (4) Hot rolling

The steel slab after the reheating is then hot rolled to obtain a hot-rolled steel sheet. In the hot rolling, microstructure in the steel sheet is homogenized and material property anisotropy is decreased, thereby improving the L-shape tension strength after resistance welding.

### • Rolling finish temperature: 850 °C to 950 °C

To achieve the above effect, hot rolling needs to be completed in the austenite single phase region. The rolling finish temperature is therefore 850 °C or more. On the other hand, when the rolling finish temperature is higher than 950 °C, the microstructure of the hot-rolled steel sheet becomes coarse, and the delayed fracture resistance after resistance welding degrades. The rolling finish temperature is therefore 950 °C or less.

### (5) Cooling

The hot-rolled steel sheet is then cooled. The steel sheet microstructure of the hot-rolled steel sheet is controlled by rapidly cooling to a temperature range where bainite transformation occurs without ferrite transformation. This homogenized control of the hot-rolled microstructure has an effect of refinement of the finally obtained steel sheet microstructure, mainly ferrite and martensite.

### • Average cooling rate: 80 °C/s or more

To achieve the above effect, the average cooling rate is 80 °C/s or more. When the average cooling rate is less than 80 °C/s, ferrite transformation begins, resulting in a non-uniform microstructure, and the resistance weldability decreases. An upper limit of the average cooling rate is not particularly limited. The average cooling rate is preferably 200 °C/s or less.

### • Cooling stop temperature: 460 °C or lower

Similarly, in order to obtain the above effect, the cooling stop temperature is 460 °C or lower. When the cooling stop temperature is higher than 460 °C, excess pearlite is formed, resulting in non-uniformity of the steel sheet microstructure of the hot-rolled steel sheet, and the resistance weldability after annealing decreases. On the other hand, a lower limit of the cooling stop temperature is not particularly limited. The cooling stop temperature is preferably 250 °C or higher.

### (6) Coiling

### • Coiling temperature: 460 °C or lower

The hot-rolled steel sheet after cooling is then coiled at a coiling temperature of 460 °C or lower. When the coiling temperature is higher than 460 °C, excess pearlite is formed, resulting in non-uniformity of the steel sheet microstructure of the hot-rolled steel sheet, and therefore the resistance weldability decreases. The coiling temperature is therefore 460 °C or lower. The coiling temperature is preferably 440 °C or lower. A lower limit of the coiling temperature is not particularly limited, but when the coiling temperature is too low, excessive hard martensite is formed and a cold rolling load increases. Accordingly, the coiling temperature is preferably 250 °C or higher.

### (7) Pickling

The hot-rolled steel sheet after the coiling is subjected to pickling. By carrying out pickling, scale formed on the surface layer of the hot-rolled steel sheet can be removed. The conditions for the pickling are not particularly limited and may be carried out in accordance with a conventional method.

### (8) Heat treatment

### • Heat treatment temperature: 300 °C to 700 °C

The hot-rolled steel sheet after the pickling is then subjected to heat treatment at a heat-treatment temperature of 300 °C to 700 °C to obtain a heat-treated hot-rolled steel sheet. By carrying out the heat treatment, the state of carbide precipitation in the finally obtained steel sheet can be improved, and the delayed fracture resistance after resistance welding can be improved.

When the heat-treatment temperature is lower than 300 °C, carbides do not precipitate sufficiently, and therefore the desired delayed fracture resistance cannot be obtained. The heat-treatment temperature is therefore 300 °C or higher. On the other hand, when the heat-treatment temperature is higher than 700 °C, austenite is generated, resulting in non-uniform element distribution, and the average number density of carbides cannot be set within the desired range. The heat-treatment temperature is therefore 700 °C or lower.

The time for which the heat treatment is carried out (heat-treatment time) is not particularly limited. When the heat-treatment time exceeds 96 h, productivity decreases significantly. Therefore, from the viewpoint of further improving productivity, the heat-treatment time is preferably 96 h or shorter.

### (9) Cold rolling

Next, the heat-treated hot-rolled steel sheet is cold-rolled to obtain a cold-rolled steel sheet. The conditions for cold rolling are not particularly limited and cold rolling may be carried out in accordance with a conventional method.

### (10) Annealing

The cold-rolled steel sheet is then annealed. The annealing promotes recrystallization and forms the microstructure necessary to obtain the desired strength (martensite).

### • Dew point in temperature range of 600 °C to 980 °C: higher than -15 °C

In the annealing, C concentration in the steel sheet surface layer decreases due to the reaction of C in the steel sheet surface layer with moisture in the atmosphere. As a result, ferrite can be generated in a region 7 µm to 12 µm from the surface of the steel sheet in the sheet thickness direction. However, when the dew point in the temperature range of 600 °C to 980 °C is -15 °C or lower, the microstructure of the surface layer of the steel sheet is not as desired, resulting in a decrease in the resistance weldability. Therefore, when the annealing is carried out, the dew point in the temperature range of 600 °C to 980 °C is higher than -15 °C. The dew point is preferably -10 °C or higher. The dew point is more preferably -5 °C or higher. On the other hand, an upper limit of the dew point is not particularly limited. From the viewpoint of improving adhesion when a zinc or zinc alloy coated or plated layer is formed on the surface of the steel sheet, the dew point is preferably 30 °C or lower. The reaction between C in the surface layer of the steel sheet and moisture mainly proceeds at temperatures of 600 °C or higher. Therefore, it suffices that the dew point during annealing is controlled in the temperature range of 600 °C to 980 °C, and the dew point in the temperature range lower than 600 °C is not particularly limited.

In the annealing, heating, holding, and cooling are carried out in the following procedure.
- Average heating rate: 12 °C/s or more up to 650 °C.
- Average heating rate: less than 12 °C/s to annealing temperature: 830 °C to 980 °C.
- Holding (soaking) at the annealing temperature for a holding time of 20 s to 360 s.
- Cooling from the annealing temperature to room temperature at an average cooling rate of 3 °C/s or more.

That is, according to the present embodiment, heating up to the annealing temperature is carried out in two stages, and the average heating rate in each stage is controlled to a specific range. In the following description, for convenience, the first stage of heating is referred to as "first heating" and the second stage of heating is referred to as "second heating".

### (First heating: up to 650 °C)

### • Average heating rate: 12 °C/s or more

First, the cold-rolled steel sheet is heated to 650 °C (first heating). When the average heating rate up to 650 °C is less than 12 °C/s, the microstructure of the steel sheet becomes coarse, and therefore a desired average grain size cannot be obtained. Therefore, in the annealing, the cold-rolled steel sheet is heated to 650 °C at the average heating rate of 12 °C/s or more. There is no particular upper limit to the average heating rate, but when heating is too rapid, recrystallization has difficulty proceeding. The average heating rate is therefore preferably 30 °C/s or less.

### (Second heating)

### • Average heating rate: less than 12 °C/s

The cold-rolled steel sheet is then heated to the annealing temperature (second heating). In the second heating, by heating to the annealing temperature at the average heating rate of less than 12 °C/s, decarburization in the vicinity of the surface layer of the steel sheet can be promoted, resulting in the formation of a ferrite phase. When the average heating rate is 12 °C/s or more, decarburization becomes insufficient, and the volume fraction of ferrite in the region 7 µm to 12 µm from the steel sheet surface in the sheet thickness direction cannot be set to the desired range. The average heating rate is therefore less than 12 °C/s. On the other hand, there is no particular lower limit to the average heating rate, but it is preferable that the average heating rate is more than 2 °C/s in order to secure tensile strength.

### • Annealing temperature: 830 °C to 980 °C

When the annealing temperature is lower than 830 °C, the ferrite fraction becomes too high, making it difficult to achieve both tensile strength and resistance weldability. The annealing temperature is therefore 830 °C or higher. The annealing temperature is more preferably 840 °C or higher. The annealing temperature is even more preferably 850 °C or higher. On the other hand, when the annealing temperature is too high, the growth of austenite crystal grains becomes more pronounced and crystal grain coarsening results in decreased resistance spot weldability. The annealing temperature is therefore 980 °C or lower. The annealing temperature is preferably 950 °C or lower.

### • Holding time: 20 s to 360 s

By holding at the annealing temperature, recrystallization is promoted and austenite transformation is caused in part or all of the microstructure. When the holding time at the annealing temperature is shorter than 20 s, the desired microstructure cannot be obtained. The holding time is therefore 20 s or longer. On the other hand, when the holding time is longer than 360 s, the crystal grains become coarse, and the resistance weldability decreases. The holding time is therefore 360 s or shorter. The holding time is preferably 300 s or shorter.

After holding at the annealing temperature, the steel sheet is cooled to room temperature at an average cooling rate of 3 °C/s or more.

### • Average cooling rate: 3 °C/s or more

When the average cooling rate in the cooling is less than 3 °C/s, the desired volume fraction of martensite is not obtained, resulting in decreased tensile strength. The average cooling rate is therefore 3 °C/s or more. On the other hand, an upper limit of the average cooling rate is not particularly limited. The average cooling rate is preferably less than 100 °C/s.

Further, after the annealing, temper rolling may be carried out. The temper rolling may be carried out under any conditions, but an elongation rate of 0.05 % to 2.0 % is preferable.

### • Second embodiment

According to the second embodiment of the present disclosure, electroplating may be applied to the steel sheet after the annealing to form a zinc or zinc alloy plated layer on at least one surface of the steel sheet. An electroplated steel sheet is obtainable by this method.

### (Electroplating)

The electroplating can be carried out under any conditions without any particular limitations. That is, according to the present disclosure, the desired properties are achieved by controlling the microstructure and precipitates of the base steel sheet, and therefore plating treatment conditions are not limited and may be carried out according to a conventional method.

### • Third embodiment

According to the third embodiment of the present disclosure, a steel sheet that satisfies the conditions mentioned above can be produced by sequentially carrying out the following processes using molten steel that has the chemical composition mentioned above as the starting material. According to this method, a hot-dip galvanized steel sheet that has a hot-dip galvanized layer on a surface may be obtained.
(1) Continuous casting
(2) Cooling
(3) Reheating
(4) Hot rolling
(5) Cooling
(6) Coiling
(7) Pickling
(8) Heat treatment
(9) Cold rolling
(10) Annealing
(11) Hot-dip coating
(12) Cooling

According to the present embodiment, each of the above processes (1) to (10) can be carried out under the same conditions as for the first embodiment. However, in the cooling process of (10) Annealing, instead of cooling to room temperature, cooling may be carried out until the steel sheet is immersed in the hot-dip coating bath. The average cooling rate during the cooling is 3 °C/s or more, similarly to the first embodiment described above.

The remaining processes (11) and (12) are described below.

### (11) Hot-dip coating

According to the present embodiment, hot-dip coating is applied to the steel sheet after the annealing by immersion in a coating bath to form a hot-dip galvanized layer on at least one surface of the steel sheet. A hot-dip galvanized steel sheet is obtainable by this method.

The hot-dip coating may be carried out by any method. That is, according to the present disclosure, the desired properties are achieved by controlling the microstructure and precipitates of the base steel sheet, and therefore coating treatment conditions are not particularly limited and may be carried out according to a conventional method.

Although any hot-dip coating bath can be used for the hot-dip coating without any particular limitation, it is preferable to use a hot-dip coating bath having a composition consisting of Al, Zn, and inevitable impurity. The Al concentration in the coating bath is not particularly limited but may be from 0.05 % to 0.25 %, for example. When the Al concentration is 0.05 % or more, the generation of bottom dross is suppressed, and therefore dross can be prevented from adhering to the steel sheet and causing a defect. On the other hand, when the Al concentration is 0.25 % or less, an increase in top dross is suppressed, and therefore dross can be prevented from adhering to the steel sheet and causing a defect. Further, material costs can be decreased by lowering the Al concentration.

Other conditions for the hot-dip coating are not particularly limited. For example, the temperature of the hot-dip coating bath is preferably 440 °C to 500 °C, which is a typical bath temperature for hot-dip coating. Further, the temperature of the steel sheet when entering the hot-dip coating bath (entry sheet temperature) is preferably 440 °C to 550 °C.

Further, the coating weight may be adjusted after the hot-dip coating treatment. The method of adjusting the coating weight is not particularly limited, and typically the coating weight is adjusted by gas wiping. The coating weight is adjusted by adjusting the conditions of gas wiping, for example, gas pressure, distance between the wiping nozzle and the steel sheet, and the like.

### (12) Cooling

The steel sheet after the hot-dip coating is then cooled to room temperature at an average cooling rate of 3 °C/s or more. When the average cooling rate in the cooling is less than 3 °C/s, the desired volume fraction of martensite is not obtained, resulting in decreased tensile strength. The average cooling rate is therefore 3 °C/s or more. On the other hand, an upper limit of the average cooling rate is not particularly limited. The average cooling rate is preferably less than 100 °C/s.

Thus, according to the present embodiment, it is important that the average cooling rate in both the cooling in the annealing process and the cooling after the hot-dip coating be 3 °C/s or more, in order to obtain the desired microstructure.

### • Fourth embodiment

According to the fourth embodiment of the present disclosure, after the hot-dip coating, alloying treatment is applied prior to the cooling to room temperature. The hot-dip galvanized layer can be alloyed by the alloying treatment to obtain a galvannealed steel sheet.

### (Alloying treatment)

The alloying treatment may be carried out under any conditions without any particular limitations. That is, according to the present disclosure, the desired properties are achieved by controlling the microstructure and precipitates of the base steel sheet, and therefore alloying treatment conditions are not limited and may be carried out according to a conventional method.

The alloying treatment is preferably carried out at a temperature of 450 °C or higher. The alloying treatment is preferably carried out at a temperature of 600 °C or lower. By carrying out the alloying treatment at a temperature of 450 °C or higher, it is possible to provide the steel sheet that has excellent press formability without residual η-phase in the coated layer. Further, by carrying out the alloying treatment at a temperature of 600 °C or lower, good coating adhesion is obtainable. The alloying time is preferably 5 s or longer. The alloying time is preferably 60 s or shorter.

### (Pre-coating)

Further, according to another embodiment of the present disclosure, prior to coating or plating to form a zinc or zinc alloy coated or plated layer, a coated or plated layer may be formed on a steel sheet surface by further carrying out optional pre-coating.

The timing of the pre-coating is not particularly limited as long as the pre-coating is prior to the coating or plating to form a zinc or zinc alloy coated or plated layer. Typically, when forming a zinc or zinc alloy plated layer by electroplating, the pre-coating is preferably carried out after the annealing, prior to the electroplating. That is, the annealing, the pre-coating, and the electroplating may be applied to the cold-rolled steel sheet in this order. On the other hand, when forming a zinc or zinc alloy coated layer by hot-dip coating, the pre-coating is preferably carried out after the cold rolling, prior to the annealing. That is, the cold rolling, the pre-coating, the annealing, and the hot-dip galvanizing may be carried out in this order. When an alloying treatment is to be carried out, the alloying treatment may be carried out after the hot-dip galvanizing as usual.

In the pre-coating, any coated or plated layer may be formed. An Fe-based coated or plated layer is preferably formed. The formation of the Fe-based coated or plated layer is preferably carried out by electroplating. The following describes the case of forming the Fe-based coated or plated layer as the pre-coating by an Fe-based electroplating treatment.

The Fe-based electroplating treatment is not limited to a particular method. For example, any bath such as a sulfuric acid bath, a hydrochloric acid bath, or a sulfuric acid + hydrochloric acid bath may be applied as a Fe-based electroplating bath.

The Fe ion content as Fe²⁺ in the Fe-based electroplating bath before the start of current passage is preferably 1.0 mol/L or more. When the Fe ion content as Fe²⁺ in the Fe-based electroplating bath is 1.0 mol/L or more, a sufficient Fe coating weight is obtainable. Further, aside from Fe ions and alloying elements such as B, C, P, N, O, Ni, Mn, Mo, Zn, W, Pb, Sn, Cr, V, and Co, the Fe-based electroplating bath may contain conductivity aids such as sodium sulfate and potassium sulfate as additives or impurities. Metal elements may be contained as metal ions, while non-metal elements may be contained as part of, for example, boric acid, phosphoric acid, nitric acid, organic acid, or the like. Further, an iron sulfate plating solution may also contain conductivity aids such as sodium sulfate and potassium sulfate, chelating agents, and pH buffers.

The cold-rolled steel sheet may be subjected to Fe-based electroplating without oxidation treatment in a preheating furnace or the like.

Other conditions for the Fe-based electroplating bath are also not particularly limited. A bath temperature of 30 °C or higher is preferred, considering the ability to maintain a constant temperature. The pH of the Fe-based electroplating bath is also not particularly specified. Considering the electrical conductivity of the Fe-based electroplating bath, the pH is preferably 3.0 or less. The current density is also not particularly limited, but is normally from 10 A/dm² to 150 A/dm². The sheet passing speed may be from 5 mpm to 150 mpm. A sheet passing speed of less than 5 mpm results in poor productivity, while a sheet passing speed of 150 mpm or more makes it difficult to stably control the coating weight.

Prior to the Fe-based electroplating, degreasing treatment and water washing may be carried out to clean the surface of the cold-rolled steel sheet, and pickling treatment and water washing may also be carried out to activate the surface. The Fe-based electroplating is preferably carried out following these pretreatments. The methods of degreasing treatment and water washing are not particularly limited, and a conventional method may be used. Various acids such as sulfuric acid, hydrochloric acid, nitric acid, and mixtures of these acids may be used in the pickling treatment. Among these, sulfuric acid, hydrochloric acid, or a mixture of these are preferred. Acid concentration is not particularly limited. In consideration of the ability to remove oxide coating and prevention of surface roughness (surface defects) due to excessive pickling, the acid concentration is preferably approximately 1 mass% to 20 mass%. Further, the pickling solution may contain a defoamer, a pickling promoter, a pickling inhibitor, or the like.

### EXAMPLES

To confirm the effectiveness of the present disclosure, steel sheets were prepared and properties were evaluated according to the following procedure. The four types of steel sheet produced were cold rolled steel sheets (CR), electrogalvanized steel sheets (EG), hot-dip galvanized steel sheets (GI), and galvannealed steel sheets (GA).

First, molten steels having the chemical compositions listed in Table 1 were continuously cast into steel slabs, which were then cooled. The average cooling rates in the temperature range to 600 °C during the cooling were as listed in Table 2.

After the cooling, the steel slabs were reheated under the conditions listed in Table 2, and then hot rolled under the conditions listed in Table 2 to obtain hot-rolled steel sheets. The hot-rolled steel sheets were cooled to the coiling temperature and coiled into coils under the conditions listed in Table 2. The hot-rolled steel sheets were then pickled.

The hot-rolled steel sheets after the pickling were then subjected to heat treatment at the heat-treatment temperatures listed in Table 2 to obtain heat-treated hot-rolled steel sheets. The heat-treatment time was 12 h.

The heat-treated hot-rolled steel sheets were then subjected to cold rolling to obtain cold-rolled steel sheets each having a thickness of 1.4 mm.

In producing the cold-rolled steel sheets (CR), the cold-rolled steel sheets were annealed under the conditions listed in Table 2. In the annealing, the cold-rolled steel sheets were soaked at the annealing temperatures and the holding times listed in Table 2, and then cooled to room temperature at the average cooling rates listed in Table 2.

In the production of electrogalvanized steel sheets (EG), the cold-rolled steel sheets were first annealed under the conditions listed in Table 2 and cooled to room temperature at the average cooling rates listed in Table 2. Electroplating was then applied to form an electrogalvanized layer on the surface of each of the steel sheets. The electroplating was carried out using a sulfuric acid bath containing 1.5 mol/L of Zn²⁺. The temperature of the plating bath was 50 °C and the pH was 1.5.

In the production of hot-dip galvanized steel sheets (GI), the cold-rolled steel sheets were first annealed under the conditions listed in Table 2 and cooled until entry into the hot-dip coating bath at the average cooling rates listed in Table 2. Each steel sheet was then immersed in a hot-dip galvanizing bath to form a hot-dip galvanizing layer on the surface of the steel sheet. As the hot-dip galvanizing bath, a coating bath consisting of Al, Zn, and inevitable impurity was used, with an Al concentration in the bath of 0.14 %. The temperature of the hot-dip galvanizing bath was 460 °C. Cooling was then carried out to room temperature at the average cooling rates listed in Table 2.

In the production of galvannealed steel sheets (GA), the cold-rolled steel sheets were first annealed under the conditions listed in Table 2, and then cooled until entry into the hot-dip coating bath at the average cooling rates listed in Table 2. The hot-dip galvanized layer was then alloyed by applying an alloying treatment. The hot-dip galvanizing bath was of the same composition as that used in the production of the hot-dip galvanized steel sheets (GI) described above, and the temperature of the coating bath was also the same. The alloying treatment was carried out at a temperature of 550 °C. Cooling was then carried out to room temperature at the average cooling rates listed in Table 2.

The microstructure and average number density of carbides in the resulting steel sheets were then measured using the following procedures. Results are indicated in Table 3.

### (Microstructure at 1/4 sheet thickness position)

### • Ferrite, martensite, bainite

The volume fractions of ferrite, martensite, and bainite in each of the steel sheets were measured by the following procedure. First, a sheet thickness cross-section of the steel sheet parallel to the rolling direction was polished and etched with 3 % nital to reveal the microstructure. The cross-section was then observed at magnifications of 3000 times and 10,000 times using a scanning electron microscope (SEM), a transmission electron microscope (TEM), and a field emission scanning electron microscope (FE-SEM), and microscope images of the microstructure at the 1/4 sheet thickness position were obtained. The area fractions of ferrite, martensite, and bainite in the microscope images were calculated by a point counting method (according to ASTM E562-83 (1988)), and each area fraction was used as a volume fraction.

The average grain sizes of ferrite, martensite, and bainite were determined by image interpretation of the microscope images. Specifically, first, the areas of the individual crystal grains of ferrite, martensite, and bainite in the microscope images were determined by image interpretation. The circle equivalent diameters of the grains were then calculated from the areas, and an average value was used as average grain size. Image-Pro from Media Cybernetics was used for the image interpretation.

### • Retained austenite

The volume fraction of retained austenite was determined by X-ray diffraction. Specifically, the steel sheet was first polished to 1/4 depth in the thickness direction, and the diffracted X-ray intensity at the 1/4 depth in the thickness direction was measured by an X-ray diffraction method. The measurements were carried out using an X-ray diffractometer RINT2200, produced by Rigaku Corporation at an accelerating voltage of 50 keV with Mo Kα radiation as the source. The integrated intensity of the X-ray diffraction lines of the {200}, {211}, and {220} planes of ferrite and the {200}, {220}, and {311} planes of austenite were measured, and the volume fraction of retained austenite was calculated from the integrated intensity results obtained. The calculations were made using the formulas described in "X-ray Diffraction Handbook" (2000, Rigaku Denki K.K.), p. 26, 62-64.

The average grain size of the retained austenite grains was determined by polishing a cross-section to 1/4 sheet thickness, etching with 3 % nital, and observation with a TEM, and then carrying out image interpretation on the TEM image. Specifically, first, a TEM image of the microstructure at the 1/4 sheet thickness position was obtained by observation using a TEM at a magnification of 15,000 times. An area of individual retained austenite grains was determined by image interpretation applied to the obtained TEM image. The circle equivalent diameter of individual grains was then calculated from the area, and an average value was used as the average grain size of retained austenite. Image-Pro from Media Cybernetics was used for the image interpretation.

### (Microstructure in region 7 µm to 12 µm from surface in sheet thickness direction)

The microstructure of the steel sheet in the range of 7 µm to 12 µm deep from a surface was observed under a microscope, and the volume fraction and average grain size of ferrite were calculated. When the measurement target was a steel sheet having a coated or plated layer (EG, GI, and GA), the measurement by glow discharge optical emission spectroscopy was carried out from the surface of the steel sheet, and a point where Fe exceeded 50 mass% was considered to be the surface of the steel sheet. Observation by microscope and calculation of the volume fraction and average grain size from the microscope image were carried out in the same manner as in the measurement of the microstructure at the 1/4 sheet thickness position.

### (Number density of precipitates)

The average number density of carbides having a particle size of 0.10 µm or more in a region 50 µm to 100 µm from a surface in the sheet thickness direction was determined by TEM observation. Specifically, the L-section of a steel sheet was first observed by TEM at a magnification of 10,000 times, and TEM images were obtained at 10 randomly selected locations from a depth range of 50 µm to 100 µm from the surface of the steel sheet. Next, the TEM images were subject to image interpretation using Image-Pro to determine the area of each carbide, and the circle equivalent diameter of each particle was calculated from the area. The carbides present in the TEM images were identified by energy dispersive X-ray spectroscopy (EDS). The number of carbides having a circle equivalent diameter of 0.10 µm or more was then counted, and the number was divided by the area of the observed range to determine the number density of the carbides. The number density of precipitates was calculated for the ten TEM images by the same procedure, and an average value was taken as the average number density of carbides.

Next, the tensile strength and the resistance weldability of the obtained steel sheets were evaluated by the following procedures.

### (Tensile strength)

From each steel sheet, a JIS No. 5 tensile test piece was taken so that the orthogonal direction to the rolling direction was the longitudinal direction (tensile direction). Tensile strength (TS) of the steel sheet was then measured by a tensile test using the test piece. The tensile tests were conducted in accordance with JIS Z 2241 (1998).

### (Resistance weldability)

As an index of weldability, L-shape tension strength and delayed fracture properties after resistance spot welding were evaluated.

### • L-shape tension strength

First, an L-shape tension test piece was prepared to evaluate the L-shape tension strength. Specifically, two test pieces measuring 50 mm × 150 mm were cut out from the steel sheet, and each of the two test pieces was bent at 90° in a V-bend so that the size of the welding surface was 50 mm × 50 mm. The two bent test pieces were welded together by resistance spot welding at the center of the welded surfaces to form an L-shape tension test piece.

The resistance spot welding was carried out using a servomotor pressure type single-phase AC (50 Hz) resistance welder. The electrode tip used was a DR-type electrode made of alumina-dispersed copper having a tip curvature radius R of 40 mm and a tip diameter of 6 mm, and the welding conditions were as follows:
- Electrode force: 4500 N
- Current passage time: 20 cycles (50Hz)
- Hold time: 5 cycles (50 Hz)
- Nugget diameter: 5.0√t (mm)

Here, t is the thickness in mm of the steel sheet used.

Using the obtained L-shape tension test piece, a tension test was carried out under conditions including a tension speed (longitudinal direction) of 10 mm/min, and the L-shape tension strength was measured. An L-shape tension strength of 1.5 kN or more was evaluated as a "pass", and an L-shape tension strength of less than 1.5 kN was evaluated as a "fail". The evaluation results are indicated in Table 3.

### • Delayed fracture resistance

First, welded joints were prepared for evaluation of delayed fracture resistance. Specifically, two test pieces each measuring 50 × 150 mm were cut out from the steel sheet. The two test pieces were then overlapped with each other with spacers each having a size of 50 mm × 50 mm and a thickness of 1.4 mm sandwiched between both ends of the test pieces, and tack-welded. Next, the centers of the tack-welded test pieces were welded to form welded joints. The welding conditions were the same as those for producing the L-shape tension test pieces, so that the nugget diameter was 5.0√t (mm).

The resulting welded joint was left standing in air at room temperature (20 °C) for 24 h. Next, the welded joint was immersed in an aqueous solution of 3 % NaCl and 1.0 % NH₄SCN, and cathodic electrolytic charging was carried out at a current density of 0.06 mA/cm² for 72 h. Whether or not delayed fracture had occurred in the welded joint was then checked. When no delayed fracture occurred in the welded joint, this was evaluated as a "pass", and when a delayed fracture occurred, this was evaluated as a "fail". The evaluation results are indicated in Table 3.

As can be seen from the results indicated in Table 3, the steel sheets satisfying the conditions of the present disclosure each had a tensile strength of 1600 MPa or more and high L-shape tension strength after resistance welding, and further had excellent delayed fracture resistance after resistance welding.

**Table 1**

| Steel sample ID | Chemical composition (mass%)* | | | | | | | | | | | | Remarks |
|---|---|---|---|---|---|---|---|---|---|---|---|---|---|
| | C | Si | Mn | P | S | Al | N | B | Nb | Ti | V | Other components | |
| A | 0.27 | 0.43 | 3.11 | 0.01 | 0.001 | 0.03 | 0.002 | 0.0022 | - | 0.015 | - | - | Conforming steel |
| B | 0.31 | 0.15 | 2.67 | 0.01 | 0.001 | 0.03 | 0.002 | 0.0014 | 0.011 | - | - | - | Conforming steel |
| C | 0.24 | 1.12 | 3.32 | 0.01 | 0.001 | 0.02 | 0.002 | 0.0009 | - | - | 0.011 | - | Conforming steel |
| D | 0.36 | 0.19 | 2.54 | 0.01 | 0.001 | 0.03 | 0.004 | 0.0029 | - | 0.064 | - | - | Conforming steel |
| E | 0.28 | 0.55 | 2.81 | 0.01 | 0.001 | 0.09 | 0.002 | 0.0041 | 0.062 | 0.025 | - | Sb:0.012, Cu:0.11, Ni:0.18 | Conforming steel |
| F | 0.26 | 1.05 | 2.94 | 0.01 | 0.001 | 0.03 | 0.002 | 0.0025 | - | - | 0.063 | Cr:0.05, Mo:0.12, Sn:0.12 | Conforming steel |
| G | 0.30 | 0.55 | 3.01 | 0.01 | 0.001 | 0.03 | 0.002 | 0.0025 | 0.019 | 0.015 | - | Ca:0.002, REM:0.002 | Conforming steel |
| H | 0.40 | 0.91 | 3.01 | 0.01 | 0.001 | 0.03 | 0.002 | 0.0021 | - | - | 0.011 | - | Comparative Example |
| I | 0.29 | 1.05 | 3.67 | 0.01 | 0.001 | 0.03 | 0.002 | 0.0019 | 0.022 | - | - | - | Comparative Example |
| J | 0.25 | 1.15 | 3.39 | 0.01 | 0.001 | 0.03 | 0.002 | - | - | - | - | Cr: 0.52 | Comparative Example |

| | | | | | | | | | | | | | |
|---|---|---|---|---|---|---|---|---|---|---|---|---|---|
| * The balance being Fe and inevitable impurity | | | | | | | | | | | | | |

**Table 2**

| No. | Steel sample ID | Coating | Production conditions | | | | | | | | | | | | | |
|---|---|---|---|---|---|---|---|---|---|---|---|---|---|---|---|---|
| | | | Cooling | Reheating | | Hot rolling | Cooling | Coiling | Heat treatment | Annealing | | | | | | Cooling after hot-dip coating |
| | | | Average cooling rate *1 (°C/h) | Heating temp. (°C) | Holding time (min) | Rolling finish temp. (°C) | Average cooling rate (°C/s) | Coiling temp. (°C) | Heat-treatment temp. (°C) | Dew point *2 (°C) | Average heating rate from to 650 °C (°C/s) | Average heating rate to annealing temp. (°C/s) | Annealing temp. (°C) | Holding time (s) | Average cooling rate (°C/s) | Average cooling rate (°C/s) |
| 1 | A | GA | 120 | 1300 | 60 | 880 | 100 | 420 | 350 | -5 | 13 | 8 | 910 | 200 | 6 | 5 |
| 2 | B | GA | 120 | 1360 | 125 | 920 | 85 | 450 | 420 | -12 | 14 | 5 | 920 | 250 | 7 | 6 |
| 3 | C | GI | 120 | 1300 | 90 | 900 | 95 | 400 | 510 | -10 | 13 | 11 | 850 | 150 | 10 | 7 |
| 4 | D | EG | 105 | 1350 | 90 | 900 | 100 | 400 | 430 | 5 | 13 | 4 | 940 | 180 | 7 | - |
| 5 | E | GA | 120 | 1350 | 120 | 900 | 110 | 420 | 360 | -5 | 12 | 7 | 920 | 250 | 7 | 10 |
| 6 | F | GA | 55 | 1300 | 90 | 920 | 95 | 400 | 410 | 0 | 13 | 9 | 850 | 150 | 10 | 5 |
| 7 | G | CR | 105 | 1350 | 90 | 900 | 95 | 420 | 360 | 5 | 13 | 10 | 940 | 300 | 7 | - |
| 8 | B | CR | 120 | 1300 | 90 | 900 | 95 | 420 | 600 | -5 | 15 | 6 | 900 | 200 | 8 | - |
| 9 | A | GI | 120 | 1350 | 90 | 900 | 95 | 380 | 500 | -10 | 16 | 6 | 900 | 250 | 6 | 5 |
| 10 | H | GA | 120 | 1300 | 100 | 900 | 90 | 420 | 400 | -10 | 13 | 8 | 900 | 250 | 7 | 4 |
| 11 | I | GA | 120 | 1300 | 100 | 900 | 90 | 420 | 400 | -10 | 13 | 8 | 900 | 250 | 7 | 4 |
| 12 | J | GA | 120 | 1300 | 100 | 900 | 90 | 400 | 400 | -10 | 13 | 8 | 900 | 250 | 7 | 4 |
| 13 | C | GA | 30 | 1300 | 100 | 920 | 100 | 420 | 400 | -10 | 13 | 8 | 900 | 250 | 7 | 4 |
| 14 | D | EG | 120 | 1100 | 100 | 900 | 90 | 420 | 400 | -10 | 13 | 8 | 900 | 250 | 7 | - |
| 15 | A | GA | 120 | 1300 | 120 | 900 | 90 | 550 | 400 | -10 | 13 | 8 | 900 | 250 | 7 | 3 |
| 16 | B | GA | 110 | 1300 | 100 | 900 | 90 | 420 | - | -10 | 13 | 8 | 900 | 250 | 7 | 5 |
| 17 | B | GA | 120 | 1360 | 125 | 920 | 85 | 450 | - | -12 | 12 | 12 | 900 | 250 | 7 | 6 |
| 18 | C | GA | 120 | 1300 | 100 | 900 | 90 | 420 | 800 | -10 | 13 | 8 | 900 | 250 | 7 | 4 |
| 19 | D | CR | 120 | 1300 | 100 | 900 | 100 | 420 | 400 | -30 | 13 | 8 | 900 | 250 | 7 | - |
| 20 | D | GA | 120 | 1300 | 120 | 920 | 90 | 420 | 400 | -10 | 2 | 8 | 900 | 250 | 7 | 4 |
| 21 | A | GA | 110 | 1300 | 100 | 900 | 100 | 420 | 400 | -10 | 13 | 25 | 900 | 250 | 7 | 4 |
| 22 | B | GA | 120 | 1300 | 100 | 900 | 90 | 420 | 400 | -10 | 13 | 8 | 900 | 250 | 1 | 5 |
| 23 | A | GA | 120 | 1300 | 100 | 900 | 90 | 420 | 400 | -10 | 13 | 8 | 900 | 250 | 7 | 1 |

| | | | | | | | | | | | | | | | | |
|---|---|---|---|---|---|---|---|---|---|---|---|---|---|---|---|---|
| *1 Average cooling rate in temperature range to 600 °C *2 Dew point in temperature range of 600 °C to 980 °C | | | | | | | | | | | | | | | | |

**Table 3**

| No. | Microstructure | | | | | | | | | | Carbides | Evaluation result | | | Remarks |
|---|---|---|---|---|---|---|---|---|---|---|---|---|---|---|---|
| | 1/4 sheet thickness position | | | | | | | | At depth 7 µm to 12 µm from surface | | Average number density (per 100 µm²) | Tensile property | Resistance weldability | | |
| | Ferrite | | Retained austenite | | Bainite | | Martensite | | Ferrite | | | TS (MPa) | L-shape tension strength | Delayed fracture property | |
| | Volume fraction (%) | Average grain size (µm) | Volume fraction (%) | Average grain size (µm) | Volume fraction (%) | Average grain size (pun) | Volume fraction (%) | Average grain size (pun) | Volume fraction (%) | Average grain size (pum) | | | | | |
| 1 | 0 | - | 0 | - | 0 | - | 100 | 5 | 62 | 7 | 8 | 1721 | pass | pass | Example |
| 2 | 0 | - | 0 | - | 0 | - | 98 | 5 | 60 | 6 | 10 | 1833 | pass | pass | Example |
| 3 | 0 | - | 2 | 2 | 0 | - | 94 | 6 | 46 | 5 | 7 | 1650 | pass | pass | Example |
| 4 | 1 | 2 | 0 | - | 1 | 1 | 98 | 4 | 81 | 6 | 10 | 1844 | pass | pass | Example |
| 5 | 0 | - | 0 | - | 0 | - | 98 | 5 | 65 | 4 | 12 | 1733 | pass | pass | Example |
| 6 | 1 | 2 | - | - | 2 | 4 | 97 | 6 | 68 | 8 | 9 | 1702 | pass | pass | Example |
| 7 | 1 | 2 | 0 | - | 0 | - | 99 | 4 | 77 | 6 | 13 | 1766 | pass | pass | Example |
| 8 | 0 | - | 3 | 2 | 1 | 4 | 96 | 5 | 60 | 5 | 6 | 1806 | pass | pass | Example |
| 9 | 0 | - | 1 | 2 | 4 | 4 | 95 | 5 | 48 | 5 | 7 | 1739 | pass | pass | Example |
| 10 | 0 | - | 5 | 4 | 3 | 3 | 92 | 5 | 28 | 11 | 12 | 1911 | fail | fail | Comparative Example |
| 11 | 0 | - | 6 | 4 | 0 | - | 94 | 8 | 44 | 6 | 3 | 1833 | fail | fail | Comparative Example |
| 12 | 1 | 2 | 6 | 4 | 6 | 6 | 13 | 7 | 50 | 7 | 2 | 1555 | fail | fail | Comparative Example |
| 13 | 3 | 2 | 0 | - | 0 | - | 97 | 5 | 50 | 11 | 2 | 1732 | fail | fail | Comparative Example |
| 14 | 7 | 5 | 0 | - | 0 | - | 93 | 6 | 81 | 12 | 6 | 1550 | fail | pass | Comparative Example |
| 15 | 6 | 4 | 0 | - | 0 | - | 94 | 8 | 55 | 11 | 5 | 1594 | fail | fail | Comparative Example |
| 16 | 0 | - | 0 | - | 0 | - | 100 | 7 | 26 | 5 | 1 | 1703 | fail | fail | Comparative Example |
| 17 | 0 | 1 | 0 | - | 0 | - | 99 | 6 | 28 | 8 | 7 | 1698 | fail | fail | Comparative Example |
| 18 | 0 | - | 0 | - | 0 | - | 100 | 8 | 68 | 11 | 4 | 1655 | fail | fail | Comparative Example |
| 19 | 0 | - | 0 | - | 0 | - | 100 | 6 | 13 | 3 | 6 | 1653 | fail | fail | Comparative Example |
| 20 | 4 | 4 | 0 | - | 0 | - | 96 | 8 | 68 | 8 | 9 | 1655 | fail | fail | Comparative Example |
| 21 | 0 | - | 0 | - | 0 | - | 100 | 6 | 19 | 9 | 6 | 1633 | fail | fail | Comparative Example |
| 22 | 4 | 2 | 0 | - | 8 | 6 | 88 | 8 | 66 | 9 | 6 | 1491 | pass | pass | Comparative Example |
| 23 | 4 | 3 | 0 | - | 9 | 6 | 87 | 8 | 67 | 8 | 8 | 1468 | pass | pass | Comparative Example |

## Claims

1. A steel sheet comprising a chemical composition containing, in mass%,
C: 0.22 % to 0.38 %,
Si: 0.05 % to 1.35 %,
Mn: 2.4 % to 3.5 %,
P: 0.02 % or less,
S: 0.002 % or less,
Al: 0.01 % to 0.10 %,
N: 0.008 % or less,
B: 0.0002 % to 0.0050 %, and
at least one selected from the group consisting of Ti: 0.005 % to 0.07 %, Nb: 0.005 % to 0.07 %, and V: 0.005 % to 0.07 %,
with the balance being Fe and inevitable impurity,
wherein a microstructure at a 1/4 sheet thickness position comprises,
in volume fraction,
ferrite: 0 % to 5 %,
retained austenite: 0 % to 5 %,
bainite: 0 % to 7 %, and
martensite: 93 % or more, wherein
an average grain size of ferrite is 3 µm or less,
an average grain size of retained austenite is 3 µm or less,
an average grain size of bainite is 5 µm or less, and
an average grain size of martensite is 7 µm or less,
wherein a microstructure in a region 7 µm to 12 µm from a surface in the sheet thickness direction comprises
a volume fraction of ferrite of 30 % or more, and
an average grain size of ferrite is 10 µm or less,
and wherein, in a region 50 µm to 100 µm from the surface in the sheet thickness direction, an average number density of carbides having a particle size of 0.10 µm or more is 5 per 100 µm² or more.

2. The steel sheet according to claim 1, wherein the chemical composition further contains, in mass%, at least one selected from the group consisting of:
Sb: 0.02 % or less,
Cu: 0.50 % or less,
Ni: 0.50 % or less,
Cr: 0.50 % or less,
Mo: 0.50 % or less,
Sn: 0.30 % or less,
Ca: 0.0050 % or less, and
REM: 0.0050 % or less.

3. The steel sheet according to claim 1 or 2, further comprising a zinc or zinc alloy coated or plated layer on at least one surface.

4. A resistance spot welding method of squeezing, by a pair of welding electrodes, a sheet combination including at least one sheet of the steel sheet according to any one of claims 1 to 3, and passing a current while applying an electrode force to join the sheet combination.

5. A resistance spot welded member including at least one sheet of the steel sheet according to any one of claims 1 to 3 in a sheet combination.

6. A method of producing a steel sheet, the method comprising:
continuous casting of molten steel having the chemical composition according to claim 1 or 2, to obtain a steel slab;
cooling the steel slab at an average cooling rate of 50 °C/h or more in a temperature range to 600 °C;
reheating the steel slab after the cooling under conditions including a heating temperature of 1280 °C to 1400 °C and a holding time at the heating temperature of 60 min or longer;
hot rolling the steel slab after the reheating under conditions including a rolling finish temperature from 850 °C to 950 °C, to obtain a hot-rolled steel sheet;
cooling the hot-rolled steel sheet to a cooling stop temperature of 460 °C or lower at an average cooling rate of 80 °C/s or more;
coiling the hot-rolled steel sheet after the cooling at a coiling temperature of 460 °C or less;
pickling the hot-rolled steel sheet after the coiling;
heat-treating the hot-rolled steel sheet after the pickling at a heat treatment temperature of 300 °C to 700 °C to obtain a heat-treated hot-rolled steel sheet;
cold rolling the heat-treated hot-rolled steel sheet to obtain a cold-rolled steel sheet; and
annealing the cold-rolled steel sheet under conditions including a dew point higher than -15 °C in a temperature range of 600 °C to 980 °C, wherein,
in the annealing, the cold-rolled steel sheet is
heated to 650 °C at an average heating rate of 12 °C/s or more, heated to an annealing temperature of 830 °C to 980 °C at an average heating rate of less than 12 °C/s,
held at the annealing temperature for a holding time from 20 s to 360 s, and
cooled from the annealing temperature to room temperature at an average cooling rate of 3 °C/s or more.

7. The method of producing a steel sheet according to claim 6, the method further comprising electroplating the steel sheet after the annealing to form a zinc or zinc alloy plated layer on at least one surface of the steel sheet.

8. A method of producing a steel sheet, the method comprising:
continuous casting of molten steel having the chemical composition according to claim 1 or 2, to obtain a steel slab;
cooling the steel slab at an average cooling rate of 50 °C/h or more in a temperature range to 600 °C;
reheating the steel slab after the cooling under conditions including a heating temperature of 1280 °C to 1400 °C and a holding time at the heating temperature of 60 min or longer;
hot rolling the steel slab after the reheating under conditions including a rolling finish temperature from 850 °C to 950 °C, to obtain a hot-rolled steel sheet;
cooling the hot-rolled steel sheet to a cooling stop temperature of 460 °C or lower at an average cooling rate of 80 °C/s or more;
coiling the hot-rolled steel sheet after the cooling at a coiling temperature of 460 °C or less;
pickling the hot-rolled steel sheet after the coiling;
heat-treating the hot-rolled steel sheet after the pickling at a heat treatment temperature of 300 °C to 700 °C to obtain a heat-treated hot-rolled steel sheet;
cold rolling the heat-treated hot-rolled steel sheet to obtain a cold-rolled steel sheet; and
annealing the cold-rolled steel sheet under conditions including a dew point higher than -15 °C in a temperature range of 600 °C to 980 °C;
hot-dip coating the cold-rolled steel sheet after the annealing to form a zinc or zinc alloy coated layer on at least one surface of the steel sheet; and
cooling the steel sheet after the hot-dip coating to room temperature at an average cooling rate of 3 °C/s or more, wherein,
in the annealing, the cold-rolled steel sheet is
heated to 650 °C at an average heating rate of 12 °C/s or more, heated to an annealing temperature of 830 °C to 980 °C at an average heating rate of less than 12 °C/s,
held at the annealing temperature for a holding time from 20 s to 360 s, and
cooled from the annealing temperature up to entry into a hot-dip coating bath at an average cooling rate of 3 °C/s or more.

9. The method of producing a steel sheet according to claim 8, wherein an alloying treatment is carried out after the hot-dip coating, prior to the cooling to room temperature.
